# EUROPEAN PATENT APPLICATION

(11) **EP 1 122 683 A2**
(43) Date of publication of application: **08.08.2001**
(21) Application number: 00112647.3
(22) Date of filing: 15.06.2000
(51) Int. Cl.: G06K 11/18, G06F 3/033

(54) **Mouse for personal computers**

(30) Priority: 02.02.2000 KR 0005281
(71) Applicant: Etostem Co., Ltd., Seoul (KR); Jang, Young-Hyun, Seoul (KR)
(72) Inventor: Jang, Young-Hyun, Youngdeonpo-ku, Seoul (KR); Lee, Taek-Ku, Seoul (KR)
(74) Representative: Patentanwälte Hauck, Graalfs, Wehnert, Döring, Siemons

(57) **Abstract**

A mouse for a personal computer includes an interface section connected to the personal computer and executing the transmission and receiving of data with the personal computer by a specific protocol, a warning section for visually or aurally warning the arrival of an e-mail when the e-mail is received at the personal computer, and a control section for informing the user whether or not the e-mail is received through the warning section when a signal received from the personal computer through the interface section is determined as a signal corresponding to the arrival of the e-mail.

## Description

### BACKGROUND OF THE INVENTION

### Field of the Invention

The present invention relates to a mouse for personal computers and, more particularly, to a mouse for personal computers that has a function for shielding microwaves and also has a function for searching electronic mail which informs an user of an e-mail when the e-mail is received at the user's e-mail server from one of many and unspecified persons belonging to subscribers of Internet networks under Internet environments.

In general, the function of personal computers has been reinforced gradually together with technology developments in electronic fields by customer's demands and function reinforcements in personal computers lead to rapid developments in operation programs.

Accordingly, convenient devices for people having very poor knowledge to computers have been developed and such people thus can handle with computers conveniently just like handling with televisions and video cassette recorders. Developments of such devices are originated from developments of operations programs with window systems. For example, if an user clicks a button equipped on a mouse under a condition that the user a cursor on a screen using an input device called "mouse" and then moves the cursor to one of icons displayed on a computer screen, a running file connected to the icon on which the moved cursor is located is substantially executed without additional works.

The conventional mouse has had changes on its appearance, but hasn't had any changes in its function. Therefore, there has been problems in that the conventional mouse does not provide any conveniences for use to users.

In the mean time, e-mail through communication networks has been used as a medium for transmitting information as Internet communication networks have been developed. E-mail has an object to quickly transmits information. However, such an object can't be achieved in a case that an user is not able to recognize arrival of e-mail. Therefore, it is required to have a function informing the user of e-mail's arrival in real time.

### SUMMARY OF THE INVENTION

The present invention has been made in view of the above circumstances and has an object to provide a mouse for personal computers that has a microwave shielding circuit, thus shielding microwaves radiating from a personal computer to prevent the microwaves from affecting a bad influence to an user.

A further object of the present invention is to provide a mouse improving a convenience that has a function for searching an electronic mail which informs an user of the electronic mail when the e-mail is received at the user's e-mail server from one of many and unspecified persons belonging to subscribers of Internet networks under Internet environments.

Additional objects and advantages of the invention will be set forth in part in the description which follows, and in part will be obvious from the description, or may be learned by practice of the invention. The objects and advantages of the invention will be realized and attained by means of the elements and combinations particularly pointed out in the appended claims.

To achieve the objects and in accordance with the purpose of the invention, as embodied and broadly described herein, a mouse for personal computers that informs an user of the arrival of an e-mail when the e-mail is received at the user's e-mail server from one of many and unspecified persons belonging to subscribers of Internet networks under Internet environments, comprises an interface section connected to the personal computer and executing the transmission and receiving of data with the personal computer by a specific protocol, a warning section for visually or aurally warning the arrival of an e-mail when the e-mail is received at an e- mail server of the personal computer, and a control section for informing the user whether or not the e-mail is received through the warning section when a signal received from the e-mail server through the interface section is determined as a signal corresponding to the arrival of the e-mail which is generated at an internal searching section of the personal computer.

According to an additional feature of the present invention, it is preferable to further comprise a sound source storing section of storing sound data for aurally warning to the user and transmitting the stored sound data to the warning section by the control operation of the control section.

According to a further additional feature of the present invention, it is preferable to further comprise a microwave shielding section for shielding microwaves radiating from a monitor or a main body of the personal computer from reaching the user while the personal computer operates.

It is to be understood that the forgoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiment(s) of the invention and together with the description, serve to explain the principles of the invention.

Figure 1 illustrates a internal block diagram of a mouse for personal computers in accordance with the present invention.

Figure 2 provides a perspective view representing an appearance of a mouse in accordance with the present invention.

Figure 3 provides a diagram for explaining a function of searching an e-mail.

Figure 4 provides a perspective view representing an appearance of a keyboard to which a technical concept of the present invention is applied.

### DESCRIPTION OF THE PREFERRED EMBODIMENT

Reference will now be made in detail to the present exemplary embodiment(s) of the invention illustrated in the accompanying drawings.

As above-mentioned, the present invention provides various functions such as e-mail searching function and microwave shielding function to key boards and mouses which are essential input devices of personal computers in order to improve conveniences in use.

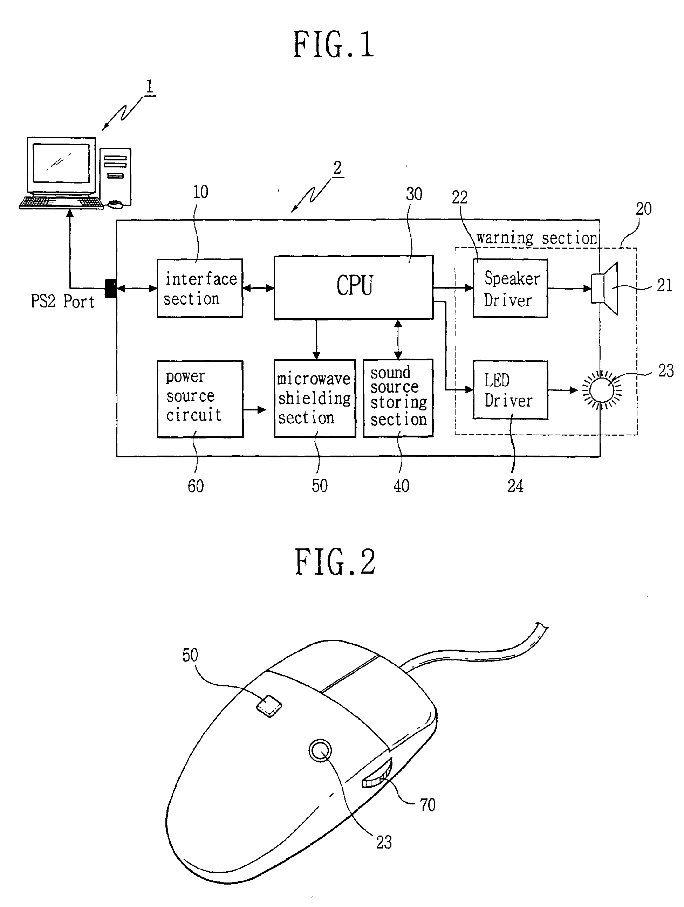

Figure 1 illustrates a internal block diagram of a mouse for personal computers in accordance with the present invention. Figure 2 provides a perspective view representing an external appearance of a mouse in accordance with the present invention.

Referring to Figure 1, reference numerall represents a personal computer. The personal computer 1 is connected to an Internet communication network via a certain connection means, which enables the personal computer 1 to transmit and receive e-mails under Internet environments. Reference 2 represents a mouse connected to the personal computer 1 via a PS2 port or a serial port to be used as an input device.

The mouse 2 comprises an interface section 10 connected to the personal computer 1 and executing the transmission and receiving of data with the personal computer 1 by a specific protocol, a warning section 20 for visually or aurally warning a user of the arrival of an e-mail when the e-mail is received at an e- mail server of the personal computer 1, a control section 30 for informing the user whether or not the e-mail is received through the warning section 20 when a signal received from the e-mail server through the interface section 10 is determined as a signal corresponding to the arrival of the e-mail which is generated at an internal searching section(not shown) of the personal computer 1, a sound source storing section 40 of storing sound data for aurally warning to the user and transmitting the stored sound data to the warning section 20 according to a control signal from the control section 30, a microwave shielding section 50 for shielding microwaves radiating from a monitor or a main body of the personal computer 1 from reaching the user while the personal computer 1 operates, and a power source circuit 60 supplying necessary powers to the above-sections 10, 20, 30, 40, and 50.

The warning section 20 comprises a speaker 21 for aurally warning the user of the arrival of the e-mail when the e-mail is arrived to the personal computer 1, a speaker driver 22 for driving the speaker 21 in response to the control signal from the control section 30 in order to have the speaker 21 output sound data, a light emitting diode(LED) 23 for visually warning the user of the arrival of the e-mail when the e-mail is arrived to the personal computer 1, and a LED driver 24 for turning the LED 23 on or off according to the control signal from the control section 30.

The sound data for warning stored in the sound source storing section 40 may include voice signals with a specific message, song signals, and melody signals.

Referring to Figure 2, the mouse 2 has a same appearance as general mouses. The LED 23 and the microwave shielding section 50 are exposed and arranged on the mouse 2. The user thus may recognize whether or not the LED 23 and the microwave shielding section 50 operate. A hot key 70 is exposed and arranged on the side of the mouse 2 so that the user may operate it easily. The hot key 70 is to execute a function confirming e-mails arrived from outside.

The operation of the mouse 2 will be hereinafter explained in detail.

The e-mail server(not shown) of the personal computer 1 searches whether or not an e-mail is existed. If the e-mail is arrived from outside and existed, the e-mail server sends a signal to the mouse 2 or the key board via a PS2 or a serial port. In response to the signal, the mouse 2 informs the user of the arrival of the e-mail by outputting a voice or lighting the LED 23 in the warning section 20.

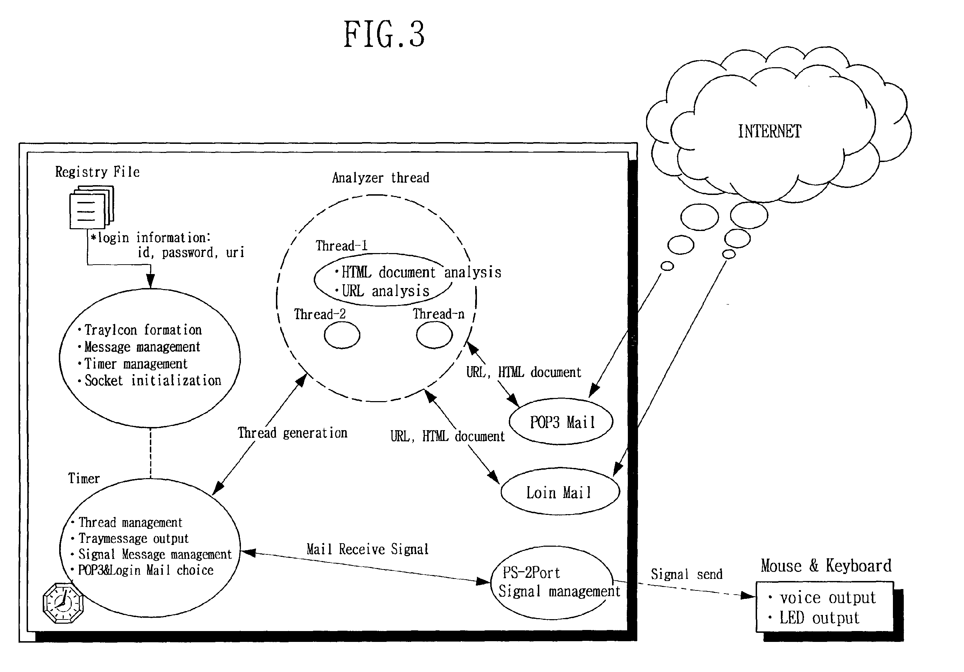

Figure 3 shows a procedure for searching whether the e-mail is received or not at the personal computer 1. The procedure will be hereinafter described in detail with reference to Figure 3.

The e-mail is generally classified into POP3 mail and WEB mail. The POP3 type of e-mail is searched using a POP3 protocol and the WEB type of e-mail is searched by analysing HTML documents using a HTTP protocol. As shown in Figure 3, a mail survey manager first initializes each functions necessary for the operation of an e-mail searcher. A timer executes the managements to procedures in accordance with each functions. An analyser thread executes the analysis to the POP3 mail and the WEB mail.

In the mean time, the personal computer 1 transmits a signal informing the user of the arrival of the e-mail via the PS2 port or the serial port. The interface section 10 of the mouse 2 receives the signal and then transmits the received signal to the control section 30. The control section 30 outputs a control signal to the warning section 20 and the sound source storing section 40 in response to the signal from the interface section 10. For a warning, the sound source storing section 40 transmits a stored voice data to the speaker 21 of the warning section 20 in response to the control signal. Accordingly, the speaker 21 outputs the voice signal to aurally warn the arrival of the e-mail and the LED 23 is turned on or off on a light to visually warn the arrival of the e-mail. In the mean time, the microwave shielding section 50 functions to shield microwaves radiating from a monitor or a main body of the personal computer 1 from reaching the user while the personal computer 1 operates.

As above-mentioned, the mouse for personal computers accordance with the present invention has an advantage that the microwave shielding section prevents microwaves radiating from a monitor or a main body of the personal computer from reaching the user while the personal computer operates. The mouse has another advantage that the arrival of an e-mail is searched automatically and informed to the user when the e-mail is received at the user's e-mail server from one of many and unspecified persons.

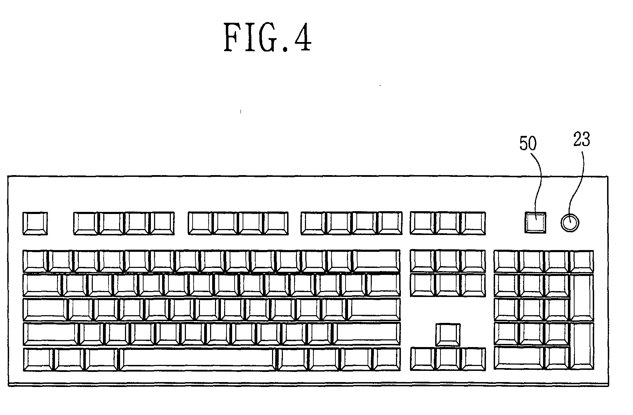

It will be apparent to those skilled in the art that various modifications and variations can be made without departing from the scope or sprit of the invention. Other embodiments of the invention will be apparent to those skilled in the art from consideration of the specification and practice of the invention disclosed herein. As shown in Figure 4, for example, the warning section 20 and the microwave shielding section 50 in accordance with the present invention may be applied to the key board. The warning section 20 and the microwave shielding section 50 may be arranged on a certain position of the key board that the user can easily recognize the conditions of the sections 20, 50.

## Claims

1. A mouse for a personal computer that informs an user of the arrival of an e-mail when the e-mail is received at the user's e-mail server from one of many and unspecified persons belonging to subscribers of Internet networks under Internet environments, comprising:
an interface section connected to the personal computer and executing the transmission and receiving of data with the personal computer by a specific protocol;
a warning section for visually or aurally warning the arrival of an e-mail when the e-mail is received at an e- mail server of the personal computer; and
a control section for informing the user whether or not the e-mail is received through the warning section when a signal received from the e-mail server of the personal computer through the interface section is determined as a signal corresponding to the arrival of the e-mail, wherein the signal received from the e-mail server being generated at an internal searching section of the personal computer.

2. A mouse for a personal computer according to claim 1, further comprising:
a sound source storing section of storing sound data for aurally warning to the user and transmitting the stored sound data to the warning section by the control operation of the control section.

3. A mouse for a personal computer according to claim 1, further comprising:
a microwave shielding section for shielding microwaves radiating from a monitor or a main body of the personal computer from reaching the user while the personal computer operates.
